# EUROPÄISCHE PATENTSCHRIFT

(11) **EP 1 432 954 B1**
(45) Veröffentlichungstag und Bekanntmachung des Hinweises auf die Patenterteilung: **01.03.2006**
(21) Anmeldenummer: 02777085.8
(22) Anmeldetag: 13.09.2002
(51) Int. Cl.: F27D 1/18, F27B 3/06, C21C 5/52

(54) **VERFAHREN UND WECHSELEINRICHTUNG ZUM AUS- ODER EINBAUEN EINES UNTERGEFÄSSES EINES ELEKTROLICHTBOGENOFENS**
METHOD AND DEVICE FOR ASSEMBLING AND DISASSEMBLING A LOWER VESSEL OF AN ELECTRIC ARC FURNACE
PROCEDE ET DISPOSITIF POUR MONTER ET DEMONTER UNE CUVE D'UN FOUR A ARC ELECTRIQUE

(30) Priorität: 06.10.2001 DE 10149367
(43) Veröffentlichungstag der Anmeldung: 30.06.2004
(73) Patentinhaber: SMS Demag Aktiengesellschaft, 40237 Düsseldorf (DE)
(72) Erfinder: SCHUBERT, Manfred, 46147 Oberhausen (DE)
(74) Vertreter: Valentin, Ekkehard
(86) Internationale Anmeldenummer: PCT/EP2002/010266
(87) Internationale Veröffentlichungsnummer: WO 2003/033981

(56) Entgegenhaltungen:
- EP-A- 0 049 926
- EP-A- 0 230 180
- EP-A- 0 837 145

## Beschreibung

Die Erfindung betrifft ein Verfahren und eine Wechseleinrichtung zum Aus- oder Einbauen von einem Untergefäß eines Elektrolichtbogenofens, bei dem das Untergefäß nach dem Lösen von einem Obergefäß des Elektrolichtbogenofens abgesenkt und durch einen Transportwagen ausgefahren und nach einer Gefäßerneuerung und nach dem Einfahren des Untergefäßes das Obergefäß und das Untergefäß wieder miteinander verbunden werden, wobei vorher gelöste Medien-, Energieversorgungs- und Messleitungen wieder angeschlossen werden.

Es ist bekannt, das Ofengefäß mit einem Chargierkran zu wechseln. Für diesen Wechsel kommen jedoch nur Kransysteme mit zulässigen Traglasten in Betracht, die erheblich über den für die Handhabung des Chargierkorbes liegen, z.B. 250 t anstelle 120 t. Der Wechselvorgang läuft dabei in folgenden Schritten ab:
- der Ofendeckel wird angehoben und ausgeschwenkt,
- die Medien-, Energieversorgungs- und Messleitungen werden vom Obergefäß getrennt,
- eine Gefäß-Transporttraverse wird am Chargierkran angebracht,
- das Obergefäß wird mit dem Chargierkran aufgenommen und zu einem Absetzplatz gefahren,
- die Medien-, Energieversorgungs- und Messleitungen werden vom Untergefäß getrennt,
- das Untergefäß wird mit dem Chargierkran aufgenommen und in eine Absetzposition gefahren,
- ein neu ausgemauertes Untergefäß wird aufgenommen und auf den Wiegenrahmen aufgesetzt,
- das Obergefäß wird aufgenommen und auf das Untergefäß aufgesetzt und
- die Medien-, Energieversorgungs- und Messleitungen zu Ober- und Untergefäß werden wieder angeschlossen.

Diese Verfahrensweise wird z.B. im Zusammenhang mit Arbeiten am Ofengefäß gemäß der EP 0 049 926 A1 angewendet.

Die bekannte Verfahrensweise zum Ein- oder Ausbauen von Obergefäß und Untergefäß bedarf hoch tragfähiger Chargierkrane und setzt ein mehrere Stunden dauerndes Arbeiten voraus. Das bekannte Verfahren ist daher sehr langsam und vorrichtungstechnisch sehr aufwendig. Chargierkrane und damit verbunden die Kranbahnen müssen im voraus für solche Arbeiten ausgelegt sein.

EP-A-230 180 beschreibt einen Elektrolichtbogenofen mit einem Obergefäß und einem Untergefäß, wobei das Untergefäß auf einem beweglichen Stützrahmen und das Obergefäß ortsfest auf einer Arbeitsbühne abgestützt ist. Das Untergefäß kann vom Obergefäß gelöst und mittels des Stützrahmens nach unten bewegt und auf einem Wagen abgesetzt werden. Es kann auf diesem zur Reparatur verfahren und von dort wieder zurückgefahren werden, wahrend das Obergefäß auf der Arbeitsbühne verbleibt.

Der Erfindung liegt die Aufgabe zugrunde, ein alternatives Verfahren und eine alternative Vorrichtung zum Aus- und Einbauen eines Untergefäßes eines Elektrolichtbogenofens bereit zu stellen. Dabei soll mit einem Chargierkran geringerer Tragfähigkeit ausgekommen und sollen die Wechselzeiten erheblich gesenkt werden.

Die gestellte Aufgabe wird erfindungsgemäß durch die Merkmale von Anspruch 1 bzw 5 gelöst. Ein Chargierkran mit erhöhter Tragfähigkeit für das Untergefäß wird nicht benötigt. Da das Obergefäß in der Ofenposition verbleiben kann und somit die Medien-, die Energieversorgungs- und die Messleitungen nicht gelöst und wieder verbunden werden müssen, kann erheblich Wechselzeit gespart werden.

Das erfindungsgemäße Verfahren sicht folgende Schritte vor
- der Ofendeckel des Elektrolichtbogenofens wird angehoben und ausgeschwenkt oder nur angehoben
- das Untergefäß und das Obergefäß werden aus einer Null-Stellung (horizontale Lage) angehoben,
- der Transportwagen mit einem Untergefäß-Wechselrahmen wird unter das Untergefäß in Ausbau-Position gefahren,
- das Untergefäß und das Obergefäß werden durch eine Gefäßhubvorrichtung zusammen auf den Transportwagen abgesenkt, und
- das Obergefäß wird vom Untergefäß getrennt und mit der Gefäßhubvorrichtung erneut angehoben und per Chargierkran ausgefahren.

Es entfällt die Kranarbeit für das Obergefäß und aufgrund des unabhängig arbeitenden Transportwagens wird nicht nur Zeit gespart, sondern das Untergefäß auch auf den Weg zu einem Ausmauerungsstand gebracht, ohne das Untergefäß noch einmal umladen zu müssen. Alternativ wird das Untergefäß mit dem Transportwagen in den Fahrbereich des Gießkrans verbracht, der üblicherweise über eine ausreichende Tragfähigkeit für das Untergefäß verfügt und von diesem zum Ausmauerungsstand transportiert wird.

Vorteilhafte Ausgestaltungen sehen vor, dass auf dem im Abstichbereich in Warteposition bereitstehenden Transportwagen ein Untergefäß-Wechselrahmen auf eine Übergabe-Höhe vor dem Untergefäß eingestellt wird.

Die entsprechend benötigten Krafteinleitungen werden dabei derart erzielt, dass an der auf dem Umfang stützenden Gefäßhubvorrichtung jeweils lösbare Bolzen (A, B) zum Verbinden oder zum Lösen des Untergefäßes und / oder des Obergefäßes mit einer Kolbenstange betätigt werden. Dadurch können beide Gefäße gleichzeitig oder getrennt angehoben oder abgesenkt werden.

Diesbezüglich besteht eine Ausgestaltung darin, dass bei eingefahrenem Bolzen (B) das Obergefäß angehoben wird.

Die entsprechende Ausgestaltung sieht vor, dass bei eingefahrenen Bolzen (A, B) das Untergefäß und das Obergefäß angehoben oder bei eingefahrenem Bolzen A das Untergefäß auf den Transportwagen abgesenkt und ausgefahren wird. Bei angehobenem Obergefäß (Bolzen B ist eingefahren) und auf den Transportwagen abgesetztem Untergefäß (Bolzen A ist ausgefahren, d.h. gelöst) kann das Untergefäß ausgefahren werden.

Zur Entlastung des Gießkrans von Transportarbeiten im Stahlwerk kann wie folgt vorgegangen werden:
- das Untergefäß wird auf dem Transportwagen von der Chargierhalle in die Gießhalle gefahren,
- der Transportwagen wird auf einer Drehscheibe gedreht und auf einem fluchtenden Gleis in einen ersten Ausmauerungsstand verbracht und
- das Untergefäß wird durch Absenken in den ersten Ausmauerungsstand abgesetzt.

Dadurch wird eine Kranbelegung in der Gießhalle von Anfang an vermieden und das Untergefäß befindet sich bei kleinster Hubarbeit schon in Ausmauerungslage.

Um das Untergefäß ohne Kranarbeit in einen Ausmauerungsstand zu transportieren, kann vorgesehen sein, dass das Untergefäß in der Gießhalle zwischen zwei Ausmauerungsständen auf einen Querwagen abgesenkt und der Querwagen in einen der Ausmauerungsstände gefahren und das Untergefäß abgesetzt wird. Dadurch können zumindest zwei Untergefäße gleichzeitig in einen Ausmauerungsstand gebracht und behandelt werden.

Die erfindungsgemäße Wechseleinrichtung für den Aus- oder Einbau von einem Untergefäß eines Elektrolichtbogenofens ist wie folgt gekennzeichnet : Es ist Ausleger für den Ofendeckel vorgesehen und ein auf einer Wiegelagerung gelagerter Kipprahmen zur Aufnahme des kippbaren Ofengefäßes.

An dem Kipprahmen greift eine Kippzylinder-Kolben-Einheit an. Es ist eine Gefäßhubvorrichtung mit einer Kolbenstange zum Anheben oder Absenken des Untergefäßes vorgesehen. An der Kolbenstange sind Höhenstellmittel und lösbare Verbindungsmittel vorgesehen zum Verbinden des Untergefäßes und des Obergefäßes, sowie zum Lösen des Untergefäßes von der Kolbenstange.

Die Kippzylinder-Kolben-Einheit und die Gefäßhubvorrichtung dienen vorteilhaft zum Übergeben des Obergefaßes und des Untergefäßes und sind zweckmäßig jeweils am Fundament oder an der Kippbühne abgestützt und beanspruchen nur wenig Raum und bedingen nur wenig Aufwand.

Die Übergabe des Untergefäßes ist dabei dahingehend gelöst, dass dem Kipprahmen, auf dessen Höhenlage abgestimmt, der Transportwagen zugeordnet ist, der auf Gleisen zwischen der Chargierhalle und der Gießhalle verkehrt.

Eine weitere Ausgestaltung dient ebenfalls der schnellen Übergabe des Untergefäßes und sieht vor, dass der Transportwagen zusammen mit einem Untergefäß-Wechselrahmen auf Hüttenflurebene verfahrbar ist.

Für zusätzliche Handhabungsweisen ist ferner vorteilhaft, dass der Transportwagen einen mittels mehrerer Kolben-Zylinder-Einheiten höhenverstellbaren Untergefäß-Wechselrahmen aufweist. Dadurch werden Übergabe-Bewegungen vom Transportwagen aus möglich.

Eine Weiterbildung sieht vor, dass der Kipprahmen zur Kippzylinder-Kolben-Einheit gegenüberliegend mittels eines verriegelbaren Kipplagers auf einem Fundamentblock abgestützt ist. Die Verriegelung erfolgt für den Gefäßwechsel und wird zum Kippen, d.h. zum Übergeben, wenn der Transportwagen unter das Untergefäß fährt, eingesetzt. Im Schmelzbetrieb ist die Verriegelung offen.

Eine kleine Kippbewegung um einige Bogengrade kann dadurch ermöglicht werden, dass das Untergefäß auf dem Kipprahmen mittels Gefäßfüßen, die gewölbte Stützflächen bilden, aufgestützt ist. Dadurch wird die geringe Schwenkbewegung mittels der Gefäßhubmittel möglich.

Der Transportwagen kann insofern weitere Funktionen übernehmen, indem der aus der Chargierhalle auf einem Gießhallen-Gleis einfahrbare Transportwagen über eine Drehscheibe in den ersten Ausmauerungsstand fahrbar ist, in dem das Untergefäß mittels der Kolben-Zylinder-Einheiten des Transportwagens absetzbar oder wieder aufnehmbar ist.

Die Funktionen des Transportwagens können auf weitere Aufgaben angewendet werden. Diesbezüglich ist vorgesehen, dass das Untergefäß mittels des Transportwagens in einen zweiten Ausmauerungsstand verfahrbar und dort vom Transportwagen auf einen Querwagen übergebbar ist, von dem aus das Untergefäß im zweiten Ausmauerungsstand absetzbar oder wieder aufnehmbar ist.

Eine Auswahlmöglichkeit im Ausmauerungsstand ergibt sich ferner dadurch, dass der Querwagen in zwei sich gegenüberliegende Ausmauerungsstände wahlweise verfahrbar ist.

Eine andere Weiterbildung der Erfindung besteht darin, dass ein Transportwagen als fahrbarer Ausmauerungsstand in U-Grundform ausgebildet ist. Übernahme oder Abgabe des Untergefäßes kann wie beschrieben erfolgen. Der Transportwagen kann an beliebiger Stelle der Chargierhalle oder der Gießhalle als Station dienen. In diesem Fall ist lediglich ein Ausbau des Untergefäßes und ein Wiedereinbau erforderlich.

Verschiedene Ausgestaltungen des Transportwagens, der den Ausmauerungsstand bildet, können vorteilhaft eingesetzt werden. So ist es zweckmäßig, dass in der U-Grundform das Untergefäß auf den beiden U-Schenkeln und auf einem die U-Schen-kel verbindenden Querrahmen aufgestützt ist.

Dabei wird auf die Ausbau- oder die Einbau-Richtung dadurch Rücksicht genommen, dass das Untergefäß zwischen den U-Schenkeln in Einbau- oder Ausbaulage aufgestützt ist. Das Heranfahren an den Ofenstand kann so genau erfolgen, dass danach nur noch ein Einbauhub vorgenommen werden muss.

Dementsprechend sind die Laufräder ausgerichtet. Dazu ist vorgesehen, dass die Laufräder des Transportwagens paarweise in den Endbereichen der U-Schenkel drehgelagert sind.

Außerdem kann der vorhandene Bauraum derart ausgenutzt werden, dass zumindest in einem der U-Schenkel der U-Grundform ein Antrieb für die Laufräder angeordnet ist.

In der Zeichnung sind Ausführungsbeispiele der Erfindung dargestellt, die nachstehend näher erläutert werden.
Es zeigen:
- Fig. 1: einen Elektrolichtbogenofen in Nullstellung mit zugeordnetem Transportwagen im Aufriss,
- die Fig. 2-5: die Gefäßhubvorrichtungen für verschiedene Stellungen bezüglich des Obergefäßes und des Untergefäßes im Aufriss,
- Fig. 6: eine Seitenansicht des Transportwagens mit Untergefäß,
- Fig. 7: eine Vorderansicht entsprechend Fig. 6,
- Fig. 8: eine alternative Ausführungsform mit verriegelbarem Kipplager und eine Einzelheit "X" in vergrößertem Maßstab, im Aufriss,
- Fig. 9: das durch Schwenken angehobene Untergefäß bei gelöstem Obergefäß im Aufriss,
- Fig. 10: einen Teilschnitt durch die Gefäßhubvorrichtung,
- Fig. 11: den eingefahrenen Transportwagen bei der Übergabe des Untergefäßes,
- Fig. 12: das Ausfahren des Transportwagens mit aufgestütztem Untergefäß,
- Fig. 13: eine alternative Ausführungsform des Transportwagens ohne ein verriegelbares Kipplager am Kipprahmen,
- Fig. 14: einen Grundriss des Gleises durch die Gießhalle mit Drehscheibe und Gleisen zu einem Ausmauerungsstand,
- Fig. 15: einen Grundriss der Gleisführung in der Gießhalle zum Ausmauerungsstand mit einem Querwagen,
- Fig. 16: eine Vorderansicht des selbständigen Transportwagens als Ausmauerungsstand,
- Fig. 17: die zu Fig. 16 gehörige Draufsicht mit aufgesetztem Untergefäß und
- Fig. 18: eine Draufsicht auf den Transportwagen ohne Untergefäß.

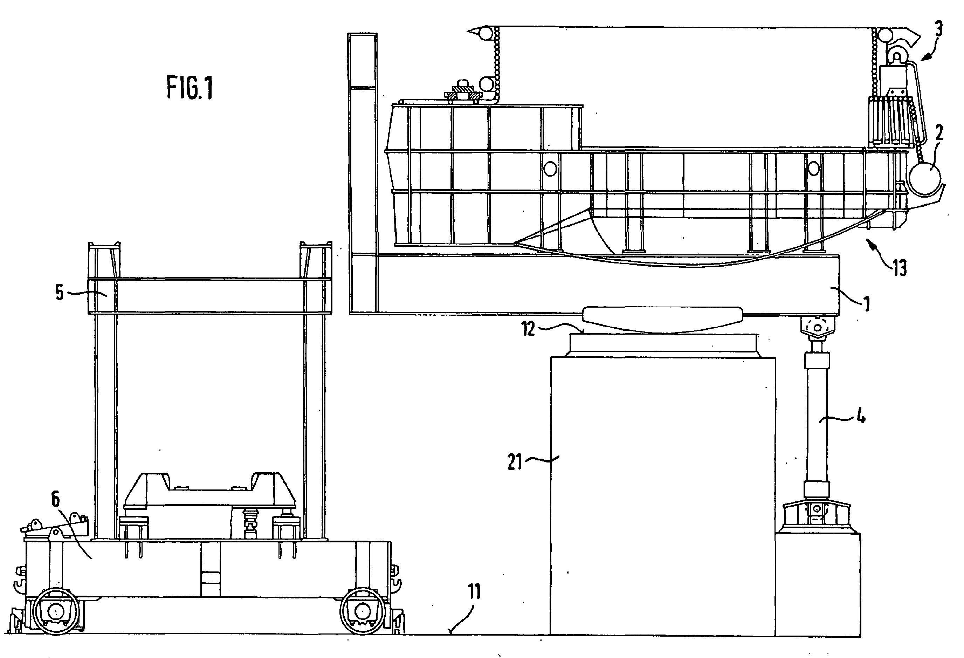

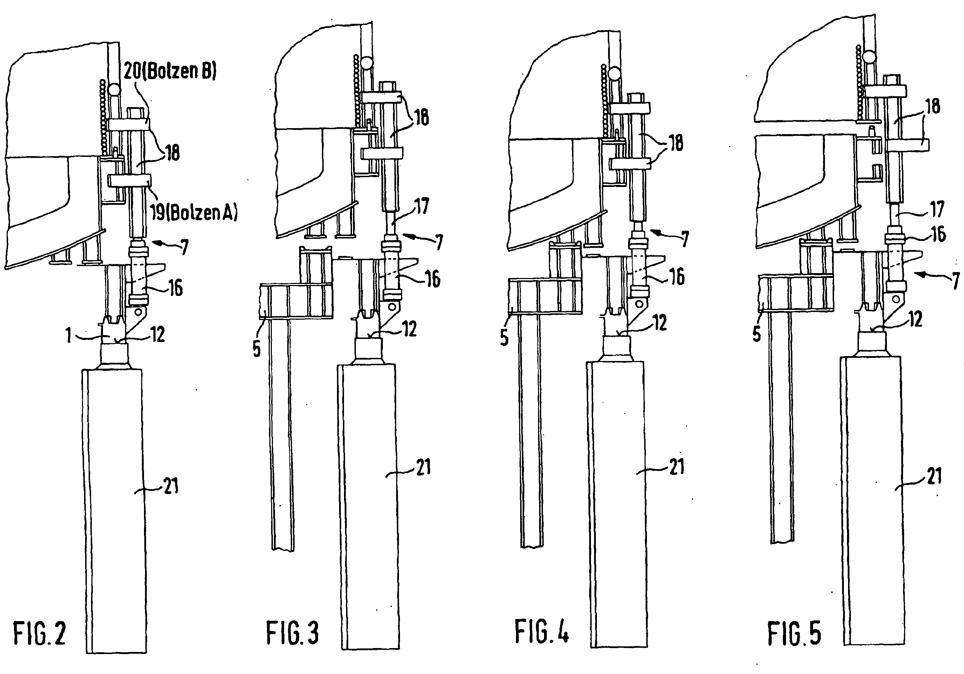

Bei dem Verfahren zum Aus- oder Einbauen von Baugruppen eines Elektrolichtbogenofens, wird der Ofendeckel über einen Ausleger angehoben und ausgeschwenkt oder nur angehoben, um den Raum über dem Obergefäß 3 freizumachen. Die Medien-, die Energieversorgungs- und die Messleitungen werden vom Obergefäß 3 und / oder vom Untergefäß 2 getrennt und nach dem Einbauen wieder verbunden. Dabei wird grundsätzlich dahingehend vorgegangen, dass das Obergefäß 3 nach Lösen vom Untergefäß 2 entweder in seiner Position verbleibt oder nach Lösen der Medien-, der Energieversorgungs- und der Messleitungen angehoben und per Chargierkran ausgefahren wird und dass das Untergefäß 2 abgesenkt und durch einen Transportwagen 6 ausgefahren und nach der Gefäßerneuerung und nach dem Einfahren des Untergefäßes 2 das Obergefäß 3 und das Untergefäß 2 wieder miteinander verbunden werden, wobei vorher gelöste Medien-, Energieversorgungs- und Messleitungen wieder angeschlossen werden. Dabei (Fig. 1) ruht das Ofengefäß 13 auf einem Kipprahmen 1, der über eine Lagerung, z.B. durch Wiegen- oder Kipplager 12, auf einem Fundamentblock 21 aufgestützt ist. Der Kipprahmen 1 ist über eine Kippzylinder-Kolben-Einheit 4 in Schwenkstellungen einstellbar. Dem Ofengefäß 13 ist der Transportwagen 6 mit einem Untergefäß-Wechselrahmen 5 zugeordnet, der auf Hüttenflurebene 11 verfahren wird. Die Vorgehensweise beim Wechsel eines Ofengefäßes 13 ist folgende:
- das Untergefäß 2 und das Obergefäß 3 werden aus der gezeichneten Null-Stellung (Fig. 1) angehoben;
- der Transportwagen 6 mit dem das Untergefäß 2 aufnehmenden Untergefäß-Wechselrahmen 5 wird unter das Untergefäß 2 in Ausbau-Position eingefahren;
- das Untergefäß 2 und das Obergefäß 3 werden durch eine Gefäßhubvorrichtung 7 (Fig. 2) angehoben (Fig. 3) und zusammen abgesenkt (Fig. 4);
- das Obergefäß 3 wird angehoben (Fig. 5), so dass dieses per Chargierkran ausgefahren werden kann;
- und das Untergefäß 2 wird mit dem Transportwagen 6 ausgefahren.

Dabei ist auf dem im Abstichbereich (Fig. 1) in Warteposition bereitstehenden Transportwagen 6 der Untergefäß-Wechselrahmen 5 auf eine Übergabe-Höhe unter dem Untergefäß 2 eingestellt.

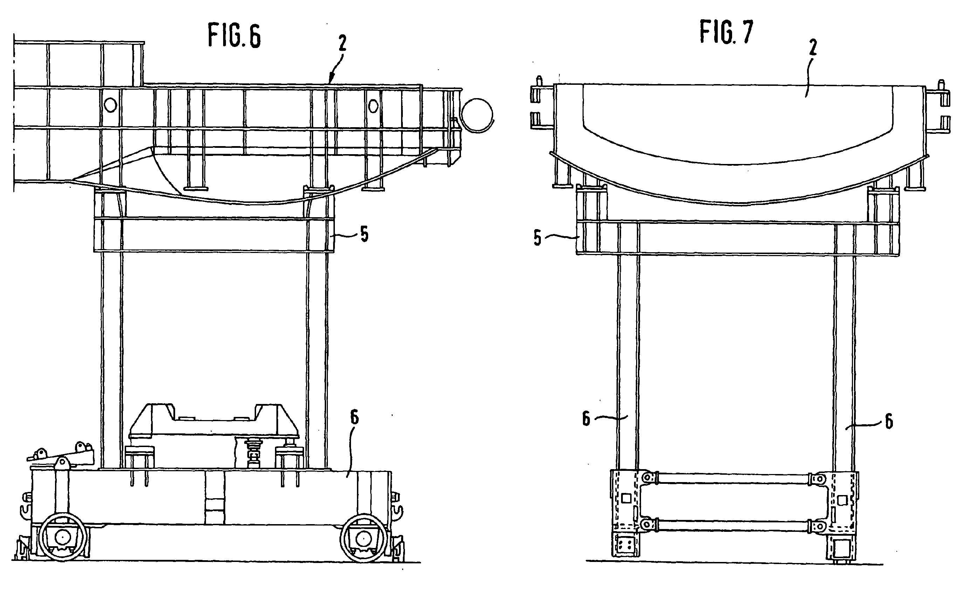

Der Transportwagen 6 mit dem auf dem Untergefäß-Wechselrahmen 5 aufliegenden Untergefäß 2 wird in die Gießhalle 25 gebracht (Fig. 6 und 7).

Diese Handhabung ermöglicht die in den Fig. 2 bis 5 gezeigte Gefäßhubvorrichtung 7, die aus auf dem Umfang verteilten Kippzylinder-Kolben-Antrieben 16 besteht. Eine Verbindung zur jeweiligen Gefäßbaugruppe wird mittels lösbaren Bolzen A, B, von denen das Verbindungsmittel 19 (Bolzen A) an einem Höheneinstellmittel 18, d.h. einer an der Kolbenstange 17 befestigten Halteschiene, eingerastet ist, hergestellt.

Dabei ist eine erste Querschiene des Untergefäßes 2 mit den Verbindungsmitteln 19 und eine zweite Querschiene des Obergefäßes 3 mit den Verbindungsmitteln 20 (Bolzen B) verbunden.

Bei eingefahrenem Bolzen B kann das Obergefäß 3 angehoben werden. Bei eingefahrenem Bolzen A kann das Untergefäß 2 angehoben und nach dem Einfahren des Transportwagens 6 auf diesen abgesenkt und ausgefahren werden.

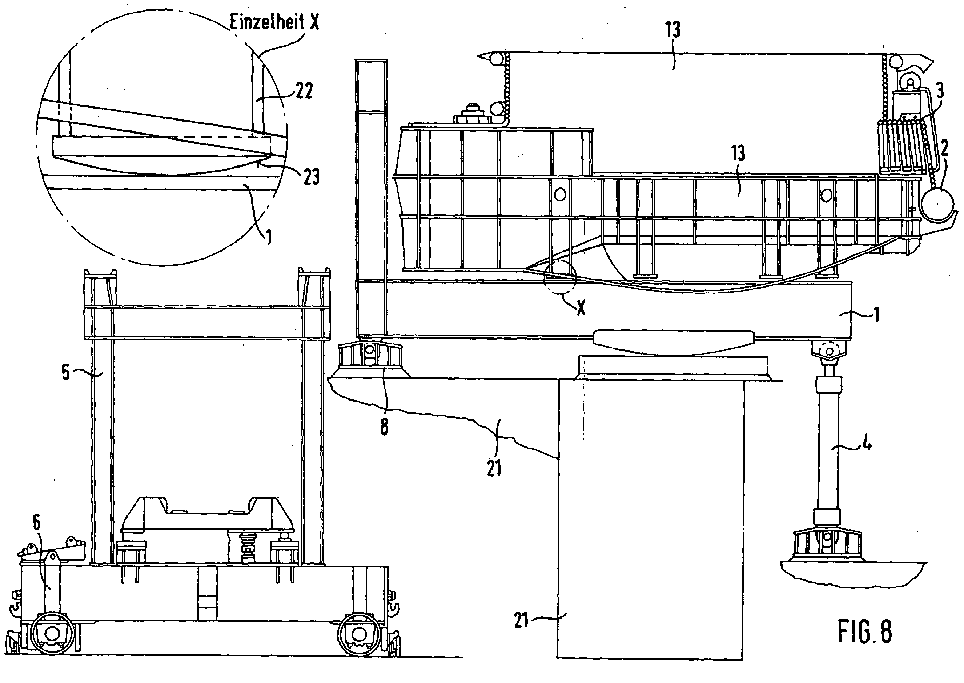

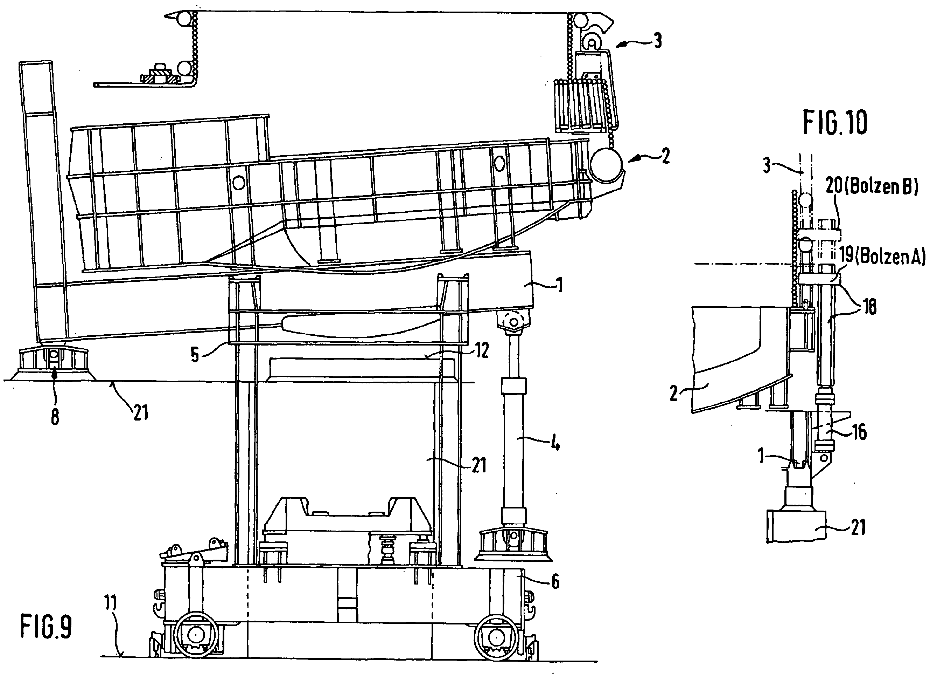

Gemäß einer zweiten Verfahrensweise werden folgende Schritte (Fig. 8) vollzogen:
- ein Kipplager 8 für den Kipprahmen 1, der das Ofengefäß 13 trägt, wird verriegelt;
- das Obergefäß 3 wird ohne Lösen der Medien-, der Energieversorgungs- und der Messleitungen angehoben,
- das Untergefäß 2 und das Obergefäß 3 werden aus der Null-Stellung in eine Kippstellung (Fig. 9) auf der Wiegen-Lagerung 12 geschwenkt,
- der Transportwagen 6 mit dem Untergefäß-Wechselrahmen 5 wird unter das Untergefäß 2 in Ausbau-Position gefahren;
- der Kipprahmen 1 wird in die Null-Stellung zurück geschwenkt bis zum Aufsetzen des Untergefäßes 2 auf den Untergefäß-Wechselrahmen 5 und
- das Untergefäß 2 wird mit dem Transportwagen 6 zu einem Ausmauerungsstand 27 oder 28 gebracht.

Auch hier wird der Transportwagen 6 mit dem Untergefäß-Wechselrahmen 5 in Warteposition im Abstichbereich (Fig. 8) gehalten.

Wie in der Einzelheit "x" in Fig. 8 gezeigt ist, sind die Gefäßfüße 22 mit einer gewölbten Stützfläche 23 gegenüber dem Kipprahmen 1 versehen.

Währenddem das Kipplager 8 zum Schwenken verriegelt ist, wird die Verriegelung während des Schmelzbetriebs ausgeschaltet, so dass der Schmelzbetrieb wie üblich abläuft. Das Kipplager 8 ruht auf dem Fundamentblock 21. Das Schwenken des Kipprahmens erfolgt über die Kippzylinder-Kolben-Einheit 4 (Fig. 9). Der Ausbau (Lösen und Anheben) des Obergefäßes 3 vom Untergefäß 2 geschieht über die Gefäßhubvorrichtung 7 mit dem Kolben-Zylinder-Antrieb 16 und det Kolbenstange 17. Die Bewegung der Kippzylinder-Kolben-Einheit 4 hebt den Kipprahmen 1 soweit ab, dass die Wiegen-Lagerung 12 freikommt und über die Kolbenstange 17 des Kolben-Zylinder-Antriebs 16 wird das Obergefäß 3 (nach erfolgtem Lösen vom Untergefäß 2) angehoben. Auch hier kann demzufolge bei ausgefahrenem Bolzen B das Obergefäß 3 frei werden und bei eingefahrenem Bolzen A wird das Untergefäß 2 auf den Transportwagen 6 abgesenkt und ausgefahren (Fig. 10).

Das Kipplager 8 und das Lager der Kippzylinder-Kolben-Einheit 4 sind auf dem Fundamentblock 21 aufgestützt und befestigt.

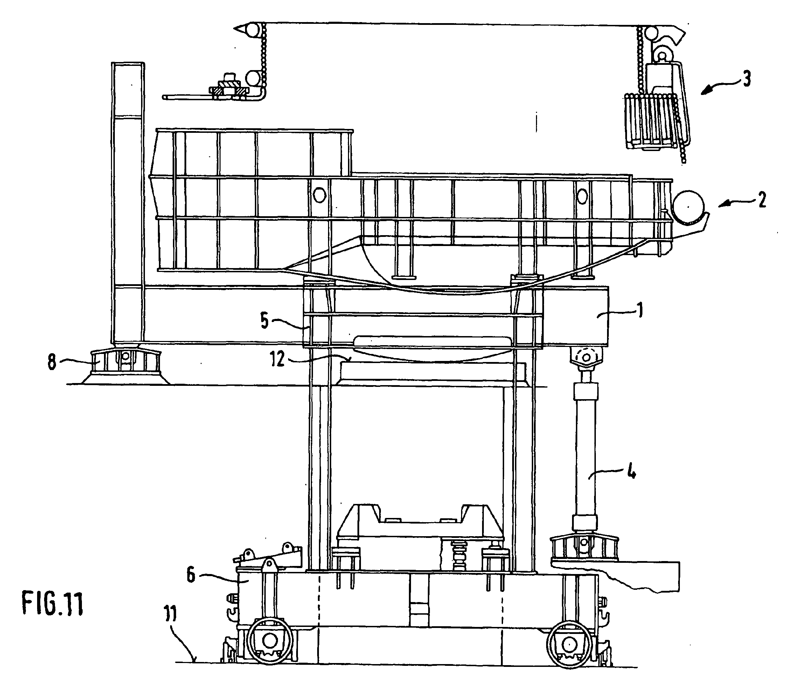

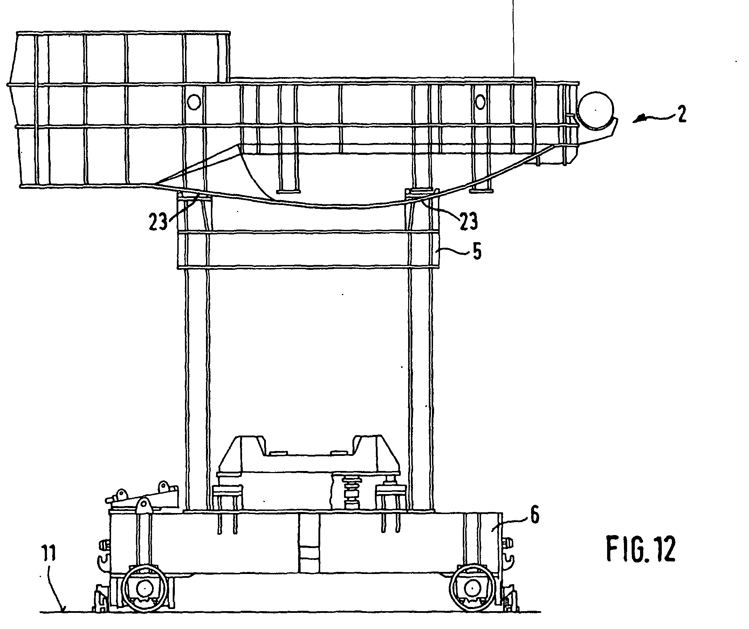

Der Ausfahrzustand des Transportwagens 6 ist nach Zurückfahren der Kippzylinder-Kolben-Einheit 4 in die Nullstellung in Fig. 11 gezeigt, in der der Transportwagen 6 auf der Hüttenflurebene 11 ausfahrbereit steht und alleine mit dem Untergefäß 2 beladen gemäß Fig. 12 ausgefahren wird.

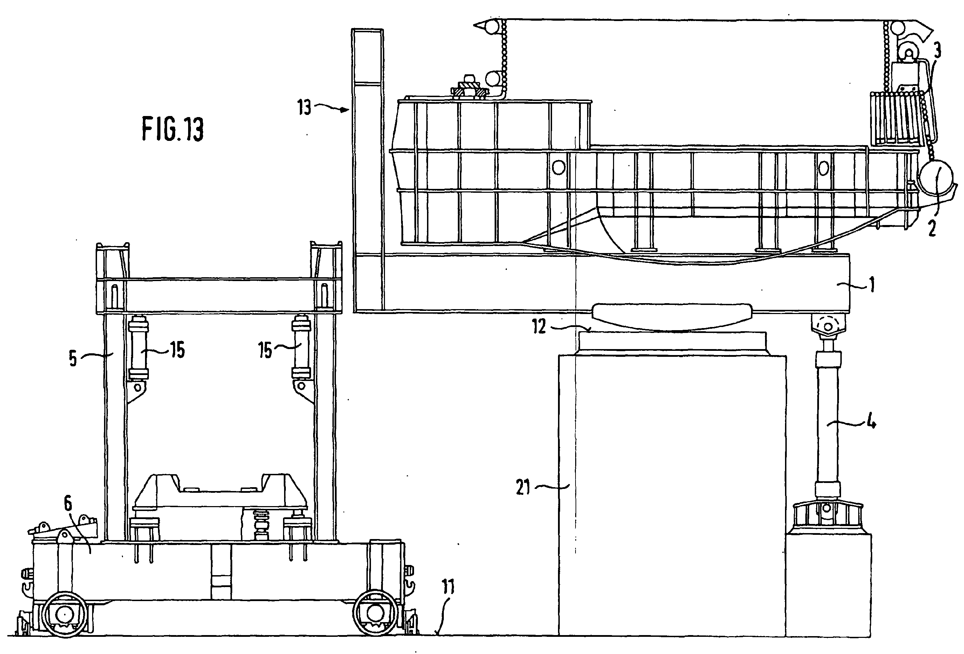

Gemäß Fig. 13 besitzt der Transportwagen 6 in einer alternativen Ausführungsform eigene Kolben-Zylinder-Einheiten 15, die am Untergefäß-Wechselrahmen 5 angreifen.

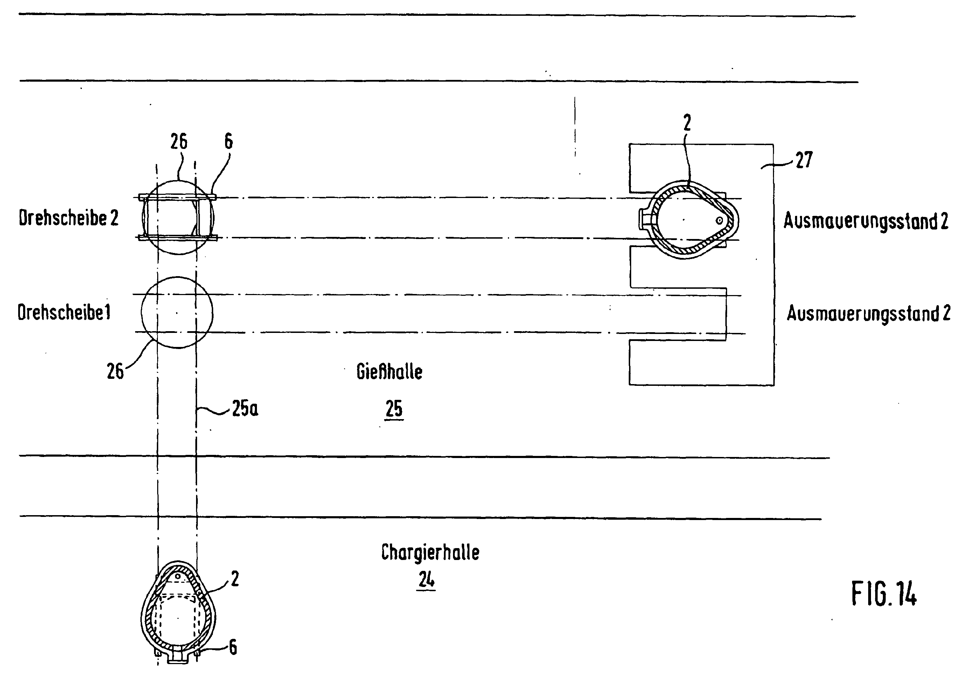

Nach einem weiteren (dritten) Verfahren werden folgende Schritte ausgeführt (Fig. 14):
- das Untergefäß 2 wird auf den Transportwagen 6 von der Chargierhalle 24 in die Gießhalle 25 über das Gießhallen-Gleis 25a gefahren;
- der Transportwagen 6 wird auf einer Drehscheibe 26 gedreht und auf fluchtendem Gleis in einen ersten Ausmauerungsstand 27 verbracht;
- und das Untergefäß 2 wird durch Absenken in den ersten Ausmauerungsstand 27 abgesetzt.

Das Untergefäß 2 kann in der Gießhalle 25 zwischen zwei Ausmauerungsständen 27 auf einem Querwagen 29 in einen der Ausmauerungsstände 27 gefahren und das Untergefäß 2 z.B. über solche Kolben-Zylinder-Einheiten 15 und einen Untergefäß-Wechselrahmen 5 abgesetzt werden.

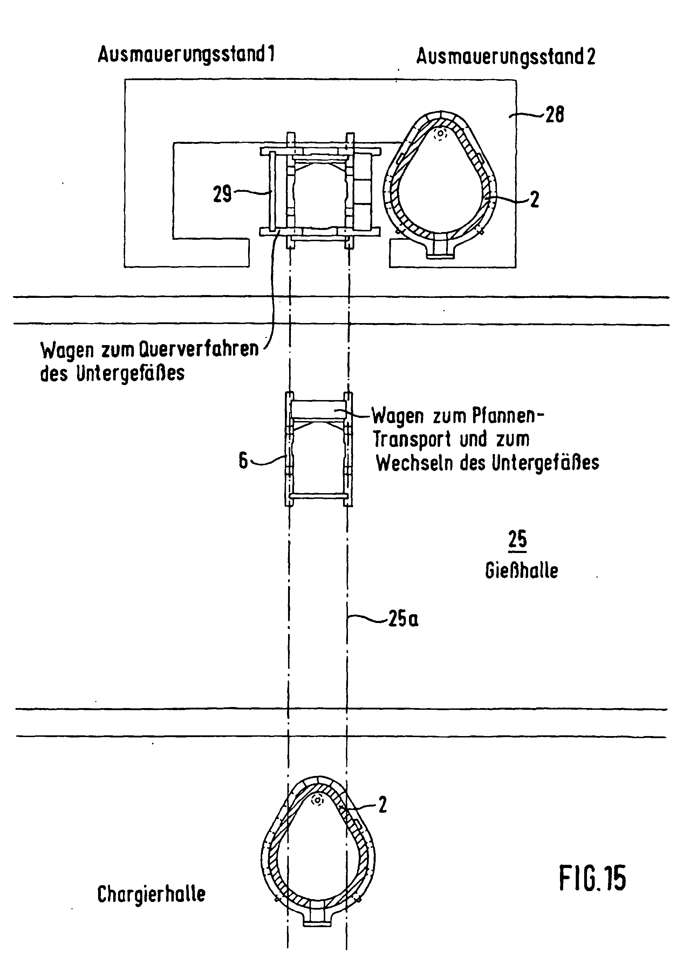

Gemäß Fig. 15 ist das Untergefäß 2 mittels des Transportwagens 6 in einen alternativen Ausmauerungsstand 28 verfahrbar und wird dort vom Transportwagen 6 auf einen Querwagen 29 übergeben, der nach links oder rechts in einen Ausmauerungsstand 28 gefahren werden kann, wo das Untergefäß 2 wie beschrieben abgesenkt wird. Der Ausmauerungsstand 28 ist bei mittigem Verlauf des Gießhallen-Gleises 25a so gestaltet, dass der Querwagen 29 in zwei sich gegenüberliegenden Ausmauerungsständen 28 wahlweise verfahrbar ist, ohne einen bereits im Ausmauerungsstand befindliches Untergefäß 2 zu stören.

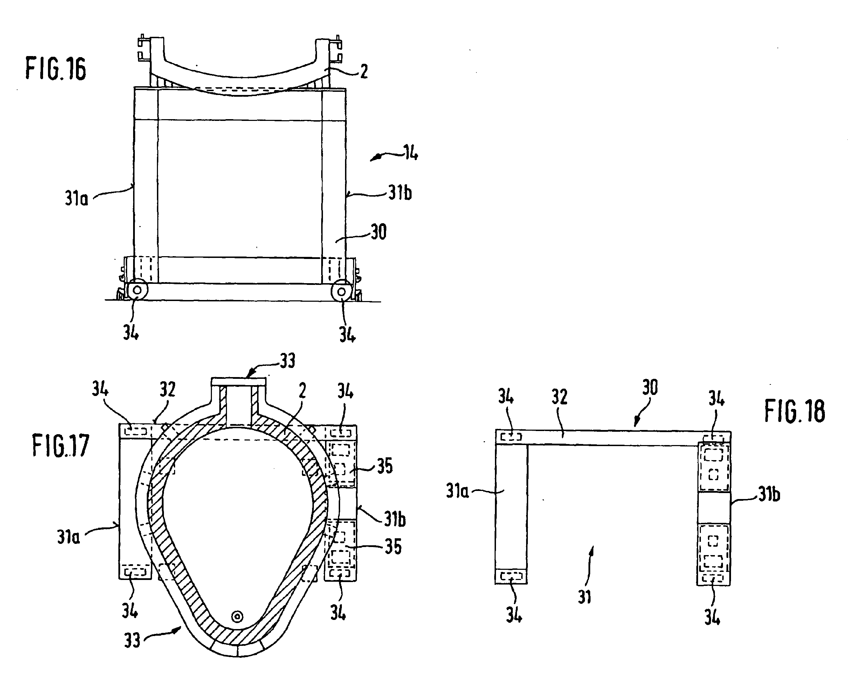

In den Fig. 16 bis 18 ist ein Transportwagen 30 gezeigt, der als fahrbarer Ausmauerungsstand 14 ausgebildet ist. Dieser Ausmauerungsstand 14 besitzt eine U-Grundform 31, in der das Untergefäß 2 auf den beiden U-Schenkeln 31a, 31b und auf einem die U-Schenkel 31a, 31b verbindenden Querrahmen 32 aufgestützt liegt. Dabei ist das Untergefäß 2 wie es ausgefahren wurde, in seiner Einbau- oder Ausbaulage 33 abgestützt und kann später wieder ohne Drehung eingefahren werden. Die Laufräder 34 des Transportwagens 30 sind paarweise in den Endbereichen der U-Schenkel 31a, 31b drehgelagert. Der in Fig. 18 ohne das Untergefäß 2 dargestellte Transportwagen 30 als "Ausmauerungsstand" bildet in einem U-Schenkel 31a, 31b der U-Grundform 31 ausreichend Raum für die Unterbringung eines Antriebs 35 für die Laufräder 34.

Der Transportwagen 30 kann als Ausmauerungsstand in einer beliebigen Station der Gießhalle 25 stationiert werden, in der die notwendige Versorgungsernergie und die Zuführung des Ausmauerungsmaterials leicht zur Verfügung gestellt werden können.

### Bezugszeichenliste

- 1: Kipprahmen
- 2: Untergefäß
- 3: Obergefäß
- 4: Kippzylinder-Kolben-Einheit
- 5: Untergefäß-Wechselrahmen
- 6: Transportwagen
- 7: Gefäßhubvorrichtung
- 8: verriegelbares Kipplager
- 11: Hüttenflurebene
- 12: Wiegen-Lagerung
- 13: Ofengefäß
- 14: fahrbarer Ausmauerungsstand
- 15: Kolben-Zylinder-Einheit (Transportwagen)
- 16: Kolben-Zylinder-Antrieb (Gefäßhubvorrichtung)
- 17: Kolbenstange
- 18: Höheneinstellmittel
- 19: Verbindungsmittel
- 20: Verbindungsmittel
- 21: Fundamentblock
- 22: Gefäßfuß
- 23: gewölbte Stützfläche
- 24: Chargierhalle
- 25: Gießhalle
- 25a: Gießhallen-Gleis
- 26: Drehscheibe
- 27: erster Ausmauerungsstand
- 28: zweiter Ausmauerungsstand
- 29: Querwagen
- 30: Transportwagen
- 31: U-Grundform
- 31a: U-Schenkel
- 31b: U-Schenkel
- 32: Querrahmen
- 33: Ein- / Ausbaulage
- 34: Laufräder
- 35: Antrieb

## Patentansprüche

1. Verfahren zum Aus- oder Einbauen von einem Untergefäß (2) eines Elektrolichtbogenofens, bei dem das Untergefäß (2) nach dem Lösen von einem Obergefäß (3) des Elektrolichtbogenofens abgesenkt und durch einen Transportwagen (6) ausgefahren und nach einer Gefäßerneuerung und nach dem Einfahren des Untergefäßes (2) das Obergefäß und das Untergefäß wieder miteinander verbunden werden, wobei vorher gelöste Medien -, Energieversorgungs- und Messleitungen wieder angeschlossen werden,
**gekennzeichnet durch** folgende Schritte:
- der Ofendeckel des Elektrolichtbogenofens wird angehoben und ausgeschwenkt oder nur angehoben,
- das Untergefäß (2) und das Obergefäß (3) werden aus einer Null-Stellung heraus angehoben,
- der Transportwagen (6) mit einem Untergefäß-Wechselrahmen (5) wird unter das Untergefäß (2) in Ausbauposition gefahren,
- das Untergefäß (2) und das Obergefäß (3) werden **durch** eine Gefäßhubvorrichtung (7) zusammen auf den Transportwagen abgesenkt, und
- das Obergefäß (3) wird von dem Untergefäß (2) getrennt und mit der Gefäßhubvorrichtung (7) erneut angehoben und per Chargierkran ausgefahren.

2. Verfahren nach Anspruch 1,
**dadurch gekennzeichnet,**
**dass** an der auf dem Umfang stützenden Gefäßhubvorrichtung (7) jeweils lösbare Bolzen (A, B) zum Verbinden oder zum Lösen des Untergefäßes (2) und/oder des Obergefäßes (3) mit einer Kolbenstange (17) betätigt werden.

3. Verfahren nach Anspruch 2,
**dadurch gekennzeichnet**,
ss bei eingefahrenen Bolzen (B) das Obergefäß (3) angehoben wird.

4. fahren nach einem der Ansprüche 2 oder 3,
**dadurch gekennzeichnet,**
**dass** bei eingefahrenem Bolzen (A, B) das Untergefäß (2) und das Obergefäß (3) angehoben oder bei eingefahrenen Bolzen (A) das Untergefäß (2) auf den Transportwagen (6) abgesenkt und ausgefahren wird.

5. Wechseleinrichtung für den Aus- und Einbau von einem Untergefäß (2) eines Ofengefäßes eines Elektrolichtbogenofens mit
einem auf einer Wiege-Lagerung (12) gelagerten Kipprahmen (1) zur Aufnahme des Ofengefäßes;
einer Kippzylinder-Kolbeneinheit (4), die an den Kipprahmen (1) angreift zum Kippen desselben; und
einer Gefäßhubvorrichtung (7), umfassend einen Kolben-Zylinder-Antrieb mit einer Kolbenstange (17) zum Anheben oder Absenken des Untergefäßes (2) in eine Aus- oder Einbauposition,
**dadurch gekennzeichnet,**
**dass** ein Ausleger für den Deckel des Elektrolichtbogenofens vorgesehen ist; und
an der Kolbenstange (17) des Kolben-Zylinder-Antriebs ein Höheneinstellmittel (18) und lösbare Verbindungsmittel (19, 20) vorgesehen sind zum Verbinden des Untergefäßes (2) und des Obergefäßes (3) mit der Kolbenstange, damit die beiden Gefäße (2, 3) zusammen durch die Gefäßhubvorrichtung (7) aus einer Nullstellung heraus angehoben und später auf einen Transportwagen abgesenkt werden können, zum Lösen des Untergefäßes von der Kolbenstange (17) nach dessen Absenkung auf den Transportwagen, und zum Beibehalten der Verbindung des Obergefäßes mit der Kolbenstange, damit das Obergefäß (3) nachfolgend anhebbar ist.

6. Wechseleinrichtung nach Anspruch 5,
**dadurch gekennzeichnet,**
**dass** der Transportwagen (6) auf die Höhe des Kipprahmens (1) abgestimmt ist und der Transportwagen (6) ausgebildet ist, auf Gleisen (25a) zwischen einer Chargierhalle (24) und einer Gießhalle (25) zu verkehren.

7. Wechseleinrichtung nach Anspruch 6,
**dadurch gekennzeichnet,**
**dass** der Transportwagen zusammen mit einem Untergefäß-Wechselrahmen (5) auf Hüttenflurebene (11) verfahrbar ist.

8. Wechseleinrichtung nach Anspruch 6,
**dadurch gekennzeichnet,**
**dass** der Transportwagen (6) einen mittels mehrere Kolben-Zylinder-Einheiten (15) höhenverstellbaren Untergefäß-Wechselrahmen (5) aufweist.

9. Wechseleinrichtung nach einem der Ansprüche 5 bis 8,
**dadurch gekennzeichnet,**
**dass** der Kipprahmen zu der Kippzylinder-Kolben-Einheit (4) gegenüberliegend mittels eines verriegelbaren Kipplagers (8) auf einen Fundamentblock (21) abgestützt ist.

10. Wechseleinrichtung nach einem der vorrangegangenen Ansprüche 5 bis 9,
**dadurch gekennzeichnet,**
**dass** das Untergefäß (2) auf den Kipprahmen (1) mittels Gefäßfüßen (22), welche gewölbte Stützflächen (23) bilden, aufgestützt ist.

## Claims

1. Method for demounting or installing a lower vessel (2) of an electric arc furnace, in which the lower vessel (2) after detaching from an upper vessel (3) of the electric arc furnace is lowered and moved out by a transport carriage (6) and after vessel renewal and after movement in of the lower vessel (2) the upper vessel and the lower vessel are again connected together, wherein previously detached media, energy-supply and measuring lines are reconnected, **characterised by** the following steps:
- the furnace cover of the electric arc furnace is raised and pivoted out or only raised,
- the lower vessel (2) and the upper vessel (3) are raised from a zero setting,
- the transport carriage (6) with a lower vessel exchange frame (5) is moved below the lower vessel (2) into a demounting position,
- the lower vessel (2) and the upper vessel (3) are lowered together onto the transport carriage by a vessel lifting device (7) and
- the upper vessel (3) is separated from the lower vessel (2), raised again by the vessel lifting device (7) and moved out by charging crane.

2. Method according to claim 1, **characterised in that** at the vessel lifting device (7), which are supported on the circumference, respectively releasable bolts (A, B) for connecting or releasing the lower vessel (2) and/or the upper vessel (3) are actuated by a piston rod (17).

3. Method according to claim 2, **characterised in that** the upper vessel (3) is raised when the bolts (B) are moved in.

4. Method according to one of claims 2 and 3, **characterised in that** when the bolts (A, B) are moved in the lower vessel (2) and the upper vessel (3) are raised or when the bolts (A) are moved in the lower vessel (2) is lowered onto the transport carriage (6) and moved out.

5. Changeover equipment for demounting and installation of a lower vessel (2) of a furnace vessel of an electric arc furnace, comprising a tip frame (1), which is mounted on a cradle mount (12), for reception of the furnace vessel; a tip cylinder-piston unit (4) engaging at the tip frame (1) for tipping the same; and a vessel lifting device (7) comprising a piston-cylinder drive with a piston rod (17) for raising or lowering the lower vessel (2) into a demounting position or an installing position, **characterised in that** an arm for the lid of the electric arc furnace is provided; and a height-adjusting means (18) and detachable connecting means (19, 20) for connecting the lower vessel (2) and the upper vessel (3) with the piston rod are provided at the piston rod (17) of the piston-cylinder drive, so that the two vessels (2, 3) can be together raised by the vessel lifting device (7) from a zero setting and later lowered onto a transport carriage, for detaching the lower vessel from the piston rod (17) after lowering thereof onto the transport carriage, and for maintaining the connection of the upper vessel with the piston rod, so that the upper vessel (3) can be subsequently raised.

6. Changeover equipment according to claim 5, **characterised in that** the transport carriage (6) is adapted to the height of the tip frame (1) and the transport carriage (6) is constructed to move on rails (25a) between a charging hall (24) and a casting hall (25).

7. Changeover equipment according to claim 6, **characterised in that** the transport carriage is movable together with a lower vessel changeover frame (5) on the plane (11) of the plant floor.

8. Changeover equipment according to claim 6, **characterised in that** the transport carriage (6) comprises a lower vessel changeover frame (5) adjustable in height by means of several piston-cylinder units (15).

9. Changeover equipment according to one of claims 5 to 8, **characterised in that** the tip frame is supported by means of a lockable tip bearing (8) on a foundation block (21) to be opposite the tip cylinder-piston unit (4).

10. Changeover equipment according to one of the preceding claims 5 to 9, **characterised in that** the lower vessel (2) is supported on the tip frame (1) by means of vessel feet (22) forming convex support surfaces (23).

## Revendications

1. Procédé de démontage ou montage d'une cuve inférieure (2) d'un four à arc électrique, dans lequel la cuve inférieure (2), après avoir été détachée d'une cuve supérieure (3) du four à arc électrique, est descendue et sortie par un chariot de transport (6) et, une fois que la cuve est rénovée et que la cuve inférieure (2) est rentrée, la cuve supérieure et la cuve inférieure sont reconnectées l'une à l'autre, les conduites de fluide, d'alimentation en énergie et de mesure préalablement débranchées étant de nouveau raccordées,
**caractérisé par** les étapes suivantes :
- on soulève et on fait pivoter ou on soulève simplement le couvercle de four du four à arc électrique,
- on soulève la cuve inférieure (2) et la cuve supérieure (3) depuis une position zéro,
- on conduit le chariot de transport (6) avec un châssis d'échange de cuve inférieure (5) sous la cuve inférieure (2) en position de démontage,
- on descend ensemble la cuve inférieure (2) et la cuve supérieure (3) au moyen d'un dispositif de levage de cuve (7) sur le chariot de transport et
- on sépare la cuve supérieure (3) de la cuve inférieure (2) et on la soulève à nouveau à l'aide du dispositif de levage de cuve (7) et on la sort au moyen de la grue de chargement.

2. Procédé selon la revendication 1,
**caractérisé en ce que**,
sur le dispositif de levage de cuve (7) s'appuyant sur la circonférence, on actionne à chaque fois des goujons détachables (A, B) pour connecter ou détacher la cuve inférieure (2) et/ou la cuve supérieure (3) à une tige de piston (17).

3. Procédé selon la revendication 2,
**caractérisé en ce que**,
lorsque le goujon (B) est rentré, la cuve supérieure (3) se soulève.

4. Procédé selon la revendication 2 ou 3,
**caractérisé en ce que**,
lorsque le goujon (A, B) est rentré, la cuve inférieure (2) et la cuve supérieure (3) sont soulevées ou, lorsque le goujon (A) est rentré, la cuve inférieure (2) est descendue sur le chariot de transport (6) et sortie.

5. Dispositif d'échange pour le démontage et le montage d'une cuve inférieure (2) d'une cuve de four d'un four à arc électrique, comportant
un châssis basculant (1) s'appuyant sur un palier à berceau (12) et destiné à recevoir la cuve de four ;
une unité vérin basculant-piston (4) qui est en prise (1) sur le châssis basculant (1) pour le faire basculer et
un dispositif de levage de cuve (7), comportant une propulsion à piston-vérin avec une tige de piston (17) pour soulever ou descendre la cuve inférieure (2) en position de démontage ou de montage,
**caractérisé en ce que**
il est prévu une flèche pour le couvercle du four à arc électrique et
il est prévu, sur la tige de piston (17) de la propulsion à piston-vérin, un moyen de réglage en hauteur (18) et des moyens de connexion détachables (19, 20) pour connecter la cuve inférieure (2) et la cuve supérieure (3) à la tige de piston, afin que les deux cuves (2, 3) puissent être soulevées ensemble par le dispositif de levage .de cuve (7) de la position zéro et descendues plus tard sur un chariot de transport pour détacher la cuve inférieure de la tige de piston (17) une fois qu'elle est descendue sur le chariot de transport et pour conserver la connexion de la cuve supérieure à la tige de piston afin de pouvoir ensuite soulever la cuve supérieure (3).

6. Dispositif d'échange selon la revendication 5,
**caractérisé en ce que**
le chariot de transport (6) est adapté à la hauteur du châssis basculant (11) et le chariot de transport (6) est conçu pour pouvoir circuler sur des voies (25a) entre une halle de chargement (24) et une halle de coulée (25).

7. Dispositif d'échange selon la revendication 6,
**caractérisé en ce que**
le chariot de transport (6) est déplaçable avec un châssis d'échange de cuve inférieure (5) sur le plan du sol de l'aciérie (11).

8. Dispositif d'échange selon la revendication 6,
**caractérisé en ce que**
le chariot de transport (6) présente un châssis d'échange de cuve inférieure (5) réglable en hauteur au moyen de plusieurs unités piston-vérin (15).

9. Dispositif d'échange selon une des revendications 5 à 8,
**caractérisé en ce que**
le châssis basculant s'appuie en face de l'unité piston-vérin (4) au moyen d'un palier à rotule verrouillable (8) sur un bloc de fondation (21).

10. Dispositif d'échange selon une des revendications précédentes 5 à 9,
**caractérisé en ce que**
la cuve inférieure (2) s'appuie sur le châssis basculant (1) au moyen de pieds de cuve (22) qui constituent des surfaces d'appui bombées (23).
